# EUROPÄISCHE PATENTANMELDUNG

(11) **EP 2 436 789 A1**
(43) Veröffentlichungstag der Anmeldung: **04.04.2012**
(21) Anmeldenummer: 11172822.6
(22) Anmeldetag: 06.07.2011
(51) Int. Cl.: C22B 7/00, C22B 7/02, C22B 7/04

(54) **Verfahren und Vorrichtung zum Aufbereiten von Reststoffen aus Industrie-Anlagen**

(30) Priorität: 01.10.2010 DE 102010047111; 23.12.2010 DE 102010064099
(71) Anmelder: SMS Siemag AG, 40237 Düsseldorf (DE)
(72) Erfinder: Weyer, Axel, 42349 Wuppertal (DE); König, Roland, 45472 Mülheim a. d. Ruhr (DE); Kleinschmidt, Guido, 47447 Moers (DE); Töpfer, Tristan, 47877 Willich (DE)
(74) Vertreter: Klüppel, Walter

(57) **Zusammenfassung**

Die Erfindung betrifft ein Verfahren und eine Vorrichtung zum Aufbereiten von Reststoffen aus Industrie-Anlagen. Um derartige Verfahren und Vorrichtungen flexibel und kostengünstig einsetzen zu können, wird erfindungsgemäß vorgeschlagen, einen mobilen Reduktionsofen an den Entstehungs- oder Lagerort der Reststoffe zu verfahren und die Reststoffe vor Ort durch Betreiben des Reduktionsofens in der Betriebsart "Reduktionsbetrieb" aufzubereiten.

## Beschreibung

Die Erfindung betrifft ein Verfahren und eine Vorrichtung zum Aufbereiten von Reststoffen aus Industrie-Anlagen, insbesondere von Schlacken oder (Stahlwerks-)Stäuben.

Weltweit fallen in Stahlwerken große Mengen Reststoffe in Form von Stahlwerksstäuben oder Schlacken an, in denen nicht genutzte Rohstoffe, insbesondere Metalle oder lösliche nicht inertisierte Schadstoffe enthalten sind.

Ein Verfahren zur Aufbereitung derartiger Reststoffe ist zum Beispiel aus der DE 601 26 526 T2, Übersetzung der Europäischen Patentschrift EP 1 126 039 B1 bekannt. Das Verfahren sieht vor, in einer hüttentechnischen Anlage in der Nähe eines Lichtbogenofens (EAF: Electronic Arc Furnace) ein ebenfalls grundsätzlich ortsfest angeordnetes Behandlungsgefäß in Form eines Reduktionsofens zu betreiben, um damit die in dem Elektrolichtbogenofen angefallenen Reststoffe aufzubereiten bzw. zu recyceln, das heißt, insbesondere die in den Reststoffen enthaltenen Metalle zurück zu gewinnen.

Der obere Teil des Behandlungsgefäßes ist ortsfest installiert, während ein unterer Schalenteil des Gefäßes beweglich ausgebildet ist; entweder ist er über einen Wagen mit Rädern verfahrbar oder über einen drehbaren Balken schwenkbar ausgebildet. Der untere Schalenteil dient als Transporteinheit zum Abholen der Reststoffe am Ort ihrer Entstehung, also bei dem Lichtbogenofen, und zum Verbringen der Reststoffe zu dem Behandlungsgefäß. Nach der Reduktion im Behandlungsgefäß setzten sich die resultierend gewonnenen geschmolzenen Metalle in dem unteren Schalenteil ab und können von diesem unterem Schalenteil zu einer Abstichstation bewegt werden, um dort abgestochen zu werden.

Oftmals lohnt es sich allerdings für die Stahlwerksbetreiber nicht, einen stationären Reduktionsofen zu installieren um die Reststoffe einzuschmelzen und das Metall wieder zu gewinnen.

Im Stand der Technik sind zwar mobile Lichtbogenöfen bekannt, zum Beispiel beschrieben in der DE 698 12 560 T2 als deutsche Übersetzung der europäischen Patentschrift EP 0 923 273 B1. Bei dem dort beschriebenen Elektro-Lichtbogenofen handelt es sich nicht um einen Elektro-Reduktionsofen (SAF Submerged Arc Furnace) zum Aufbereiten von Reststoffen. Der dort beschriebene Elektro-Lichtbogenofen besteht offensichtlich aus einem geschlossenen Gefäß, wobei die während des Betriebs anfallenden unverbrannten Abgase einem Abgassystem zur Reinigung zugeführt werden. Außerdem weist der dort beschriebene Ofen offensichtlich mindestens zwei Abstichvorrichtungen auf. Der Elektro-Lichtbogenofen ist offensichtlich nicht geeignet zum Betrieb als Reduktionsofen ohne Lichtbogen, sondern nur zum Betrieb als reiner Schmelzofen.

Die WO 2009/010266 A2 offenbart einen kleinen, zerlegbaren Reduktionsofen.

Der Erfindung liegt die Aufgabe zugrunde, ein bekanntes Verfahren und eine bekannte Vorrichtung zum Aufbereiten von Reststoffen aus Industrie-Anlagen dahingehend weiterzubilden, dass sie flexibel einsetzbar sind und dass die Kosten für das Aufbereiten der Reststoffe gesenkt werden können.

Diese Aufgabe wird durch das im Patentanspruch 1 beanspruchte Verfahren gelöst. Dieses ist dadurch gekennzeichnet, dass ein mobiler Reduktionsofen an den Ort der Reststoffe verfahren wird und die Reststoffe vor Ort durch Betreiben des Reduktionsofens in der Betriebsart "Reduktionsbetrieb" aufbereitet werden.

Der Begriff "Industrie-Anlage" meint grundsätzlich jede Art von Betrieb, bei welchem zumindest einzelne der unten definierten Reststoffe anfallen. Dies kann zum Beispiel ein metallverarbeitender Betrieb oder eine "hüttentechnische Anlage", insbesondere ein Stahlwerk, ein Aluminiumwerk, eine Kupferhütte oder allgemein einen Metallschmelzbetrieb sein. Auch (Sonder-)Müllverbrennungsanlagen zählen dazu, in deren Elektrofiltern metallhaltige Filterstäube und in den Öfen Schlacken anfallen können.

Der Begriff "Ort" bezeichnet entweder eine Industrie-Anlage als Entstehungsort der Reststoffe oder eine Deponie, auf welcher die Reststoffe gelagert sind.

Der Begriff "Reststoffe" aus Industrie-Anlagen bezeichnet insbesondere metallhaltige Schlacken oder metallhaltige Filterstäube, wie sie u. a. bei der Stahlproduktion oder der Müllverbrennung anfallen, oder metallhaltigen Wälzschlamm, wie er beim Walzen von Metallband anfällt.

Die Begriffe "mobiler Reduktionsofen", "Vorrichtung" oder "Reduktionsofen (mit Zusatzaggregaten und Komponenten) und einer Transporteinheit" werden nachfolgend gleichbedeutend verwendet.

Das erfindungsgemäße Verfahren bietet folgende Vorteile:

Die Reststoffe werden an ihrem Entstehungsort oder ihrem aktuellen Lagerort, zum Beispiel auf einer Deponie, einer Aufbereitung bzw. einem Recycling zugeführt; dies hat den Vorteil, dass die Reststoffe, die oftmals in sehr großen Mengen anfallen, (zum Beispiel mehrere 1000 Tonnen) ihrerseits nicht transportiert zu werden brauchen und entsprechende Transportkosten für die Reststoffe entfallen können. Der mobile Reduktionsofen ist flexibel einsetzbar; er kann an beliebigen Orten für beliebige Betriebszeiten je nach Bedarf eingesetzt werden. Dies steigert den Wirkungsgrad bzw. die Ausnutzung des mobilen Reduktionsofens. Das Mieten eines mobilen Reduktionsofens ist für die Stahlwerksbetreiber in der Regel preiswerter als die Installation eines ortsfesten Reduktionsofens neben einem Schmelzofen, denn die Kosten für den mobilen Reduktionsofen fallen lediglich bei Bedarf an. In Einzelfällen kann sich für den Betreiber einer großen Industrie-Anlage jedoch auch die Anschaffung eines mobilen Reduktionsofens lohnen; das gilt insbesondere dann, wenn in der Industrie-Anlage die aufzubereitenden Reststoffe an mehreren unterschiedlichen Orten anfallen. Weiterhin bietet der Betrieb des mobilen Reduktionsofens am Ort der Reststoffe den Vorteil, dass das durch den Reduktionsbetrieb zurück gewonnene Metall oder Nichteisenmetall in der hüttentechnischen Anlage ebenfalls wieder weiter verwendet werden kann. Vorteilhafterweise entfallen dadurch auch für dieses wieder gewonnene Metall die ansonsten erforderlichen Transportkosten zum Ort der Weiterverarbeitung.

Gemäß einem ersten Ausführungsbeispiel kann der mobile Reduktionsofen in der Industrie-Anlage entweder als separate Einheit oder in den dort bereits vorhandenen Materialfluss temporär integriert betrieben werden.

Das Verfahren des Reduktionsofens kann zum Beispiel per Lastkraftwagen (insbesondere Tieflader), oder per Schienenfahrzeug und/oder per Schiff erfolgen.

In der Betriebsart "Reduktionsbetrieb" wird der Reduktionsofen typischerweise mit Drehstrom ohne Bodenelektrode in einer Schlackenfahrweise betrieben. Diese zeichnet sich insbesondere dadurch aus, dass kein Lichtbogen entsteht. Konkret erfolgt der Energieeintrag über den Widerstand der Reststoffe, beispielsweise der Schlacke, in die die Elektroden eingetaucht sind.

Im "Reduktionsbetrieb" wird der Reduktionsofen typischerweise halb geschlossen betrieben, das heißt CO verbrennt an Oberfläche, verbrannte Abgase werden gekühlt und gereinigt.

Der Reduktionsofen kann aus einer mobilen Energieversorgungseinheit, zum Beispiel einem Dieselaggregat, oder aus dem Werksnetz der hüttentechnischen Anlage oder der Deponie mit elektrischer Energie gespeist werden.

Nach seinem Betrieb als Reduktionsofen zum Aufbereiten der Reststoffe kann der Reduktionsofen vorteilhafterweise auf eine Betriebsart "Schmelzbetrieb" mit Lichtbogenbetrieb umgestellt werden zum Erzeugen von Legierungen oder zum Schmelzen von Metallen, insbesondere Nichteisenmetallen. Dazu können die aus dem vorherigen Reduktionsbetrieb gewonnenen Metalle oder Nichteisenmetalle verwendet werden. Nach dem Reduktionsbetrieb können auch nicht inertisierte Schlacken zurückbleiben, die als solche wegen ihrer Schädlichkeit für die Umwelt nicht ohne Weiteres deponierbar sind. In einem nachfolgenden Schmelzbetrieb können diese Schlacken in Eluat-beständige inerte Schlacken umgewandelt werden, die dann deponierbar sind.

Die oben genannte Aufgabe wird weiterhin durch eine Vorrichtung gemäß Anspruch 11 mit einem Reduktionsofen und einer Transporteinheit auf welcher der Reduktionsofen montiert ist, gelöst. Die Vorteile dieser Vorrichtung entsprechen den oben mit Bezug auf das erfindungsgemäße Verfahren genannten Vorteilen. Einzelne Komponenten des Reduktionsofens, wie Elektroden, Elektrodenarme oder die Abstichschnauze sind vorteilhafterweise abnehmbar, um die Abmessungen des Reduktionsofens während des Transportes in zum Beispiel durch die Straßenverkehrsordnung vorgegebenen Grenzen, zum Beispiel: Transporthöhe 4 m, zu halten.

Dem Reduktionsofen zugeordnete Zusatzaggregate, wie zum Beispiel eine Abgasreinigungseinrichtung, eine Kühlwasserversorgungseinheit, eine Hydraulikstation, eine Energieversorgungseinheit, eine Schaltanlage und/oder ein Leitstand sind vorzugsweise ebenfalls mobil ausgebildet und können entweder auf der selben Transporteinheit, auf welcher der Reduktionsofen transportiert wird oder auf einer separaten Transporteinheit an den jeweiligen Einsatzort eines Reduktionsofens mit verfahren werden.

Die elektrische Leistung des erfindungsgemäßen Reduktionsofens liegt typischerweise unter 2 MVA. Die Primärspannung liegt beispielsweise bei 10 kV und die Sekundärspannung bei beispielsweise 10-200 Volt. Damit die Mobilität der Vorrichtung gewährleistet ist, muss die Masse des Reduktionsofens und der Zusatzaggregate begrenzt sein. Die Masse ist vorzugsweise auf 20 bis 60 Tonnen begrenzt.

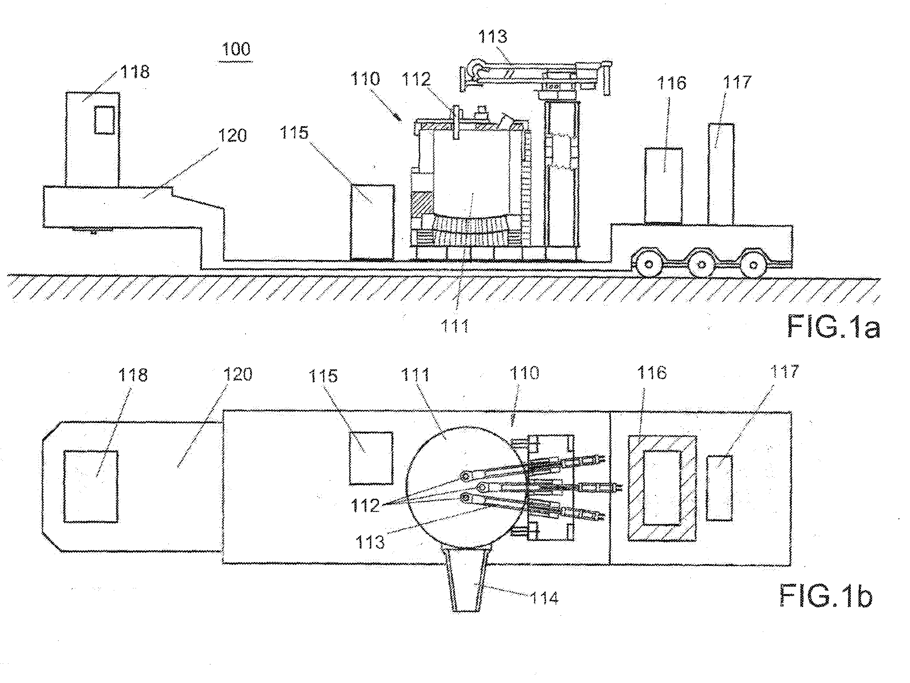

Die Erfindung wird nachfolgend unter Bezugnahme auf die der Beschreibung beigefügten Figuren näher erläutert, wobei
Figur 1a die erfindungsgemäße Vorrichtung in einer Seitenansicht; und
Figur 1b die erfindungsgemäße Vorrichtung in einer Draufsicht
zeigt.

Gleiche technische Merkmale sind in den beiden Figuren mit gleichen Bezugszeichen bezeichnet.

Figur 1a zeigt die erfindungsgemäße Vorrichtung 100 umfassend einen Reduktionsofen 110 mit diversen abnehmbaren Komponenten und Zusatzaggregaten auf einer Transporteinheit 120, hier in Form eines Tiefladers, montiert. Alternativ zu dem Tieflader kann die Transporteinheit auch in Form eines Schienenfahrzeugs oder eines Schiffes ausgebildet sein.

Der Reduktionsofen 110 besteht neben dem eigentlichen Ofengefäß 110 aus den Elektroden 112, den Elektrodenarmen 113 und der Abstichschnauze 114. Die Elektroden, die Elektrodenarme und die Abstichschnauze sind vorzugsweise zu Transportzwecken abnehmbar, um die externen Abmessungen der Vorrichtung, das heißt des mobilen Reduktionsofens zu reduzieren.

Dem Reduktionsofen 110 sind eine Mehrzahl von Zusatzaggregaten zugeordnet, welche für den Betrieb des Reduktionsofens unerlässlich sind. Dazu gehören zum Beispiel eine Abwasserreinigungseinrichtung, eine Kühlwasserversorgungseinheit mit einer Kühlwasserpumpe und einem Tank, eine Hydraulikstation 115 zum Bewegen der Elektrodenarme, eine Energieversorgungseinrichtung 116 zum Bereitstellen der erforderlichen elektrischen Energie für die Elektroden, insbesondere Drehstrom, eine Schaltanlage 117 sowie ein Leitstand 118 zum Bedienen des Reduktionsofens durch eine Bedienperson.

Durch die Anordnung der Zusatzaggregate und der abnehmbaren Komponenten auf derselben Transporteinheit 120 auf welcher auch das Ofengefäß 111 montiert ist, oder auf einer separaten Transporteinheit, ist der Reduktionsofen vorteilhafterweise an jedem beliebigen Einsatzort notfalls autark betreibbar. Alternativ kann der Reduktionsofen für seinen Betrieb natürlich auch auf entsprechende Zusatzaggregate am jeweiligen Einsatzort, das heißt einer hüttentechnischen Anlage oder einer Deponie zurückgreifen, wenn diese Zusatzaggregate dort verfügbar sind. Der Reduktionsofen könnte auch modular in die hüttentechnische Anlage eingebunden werden, indem er dort in der Materialzuführung oder in der Abgasentsorgung an bestehende Einrichtungen angeschlossen wird.

Figur 1b zeigt die bereits unter Bezugnahme auf Figur 1a beschriebene Vorrichtung in einer Draufsicht. Es sind grundsätzlich dieselben Komponenten und Zusatzaggregate der Vorrichtung zu erkennen, wie in Figur 1a. Darüber hinaus ist lediglich zu erkennen, dass die Abstichschnauze 114 seitlich über die Abmessungen der Transporteinheit 120 überstehen würde, wenn diese nicht zum Transport abmontiert wird.

Nach dem Einsatz in der Betriebsart "Reduktionsbetrieb", bei welcher der Reduktionsofen mit Drehstrom halb geschlossen ohne Bodenelektrode in einer Schlackenfahrweise betreiben wird, kann der Reduktionsofen erfindungsgemäß auch in einer Betriebsart "Schmelzbetrieb" mit einem Lichtbogen zum Erzeugen von Legierungen oder zum Schmelzen von Metallen betrieben werden. Das Herstellen der Legierungen bietet eine Möglichkeit, zumindest teilweise die in dem vorherigen Reduktionsbetrieb aus den Reststoffen zurück gewonnenen Metalle wieder zu verwenden. Insofern bietet sich der Schmelzbetrieb insbesondere an für die Herstellung von Ferrolegierungen oder Nichteisenmetallen. Konkret können im Schmelzbetrieb zum Beispiel folgende Legierungen FeCr, FeNi, FeMn, SiMn, FeSi, Si Metall, CaC₂, FeNb, TiO₂ sowie als Nichteisenmetalle Kupfer, Platin oder Paladium hergestellt werden.

### Bezugszeichenliste

- 100: Mobiler Reduktionsofen = Vorrichtung = Reduktionsofen + Transporteinheit
- 110: Reduktionsofen
- 111: Ofengefäß
- 112: Elektroden
- 113: Elektrodenarme
- 114: Abstichschnauze
- 115: Hydraulikstation
- 116: Energieversorgungseinheit
- 117: Schaltanlage
- 118: Leitstand
- 120: Transporteinheit

## Patentansprüche

1. Verfahren zum Aufbereiten von Reststoffen aus Industrie-Anlagen, **gekennzeichnet durch** folgende Schritte:
Verfahren eines mobilen Reduktionsofens (100) an den Ort der Reststoffe; und
Aufbereiten der Reststoffe vor Ort **durch** Betreiben des Reduktionsofens in der Betriebsart Reduktionsbetrieb.

2. Verfahren nach Anspruch 1, **dadurch gekennzeichnet, dass** es sich bei dem Ort um den Entstehungsort der Reststoffe oder eine Deponie, auf welcher die Reststoffe lagern, handelt.

3. Verfahren nach Anspruch 2, **dadurch gekennzeichnet, dass** der mobile Reduktionsofen (100) in der Industrie-Anlage am Entstehungsort der Reststoffe temporär in den Materialfluß integriert wird.

4. Verfahren nach einem der vorangegangenen Ansprüche, **dadurch gekennzeichnet, dass** das Verfahren des Reduktionsofens (110) per Lastkraftwagen, per Schienenfahrzeug und/oder per Schiff erfolgt.

5. Verfahren nach einem der vorangegangenen Ansprüche, **dadurch gekennzeichnet, dass** der Reduktionsofen (110) in der Betriebsart Reduktionsbetrieb mit Drehstrom ohne Bodenelektrode in einer Schlackenfahrweise betrieben wird.

6. Verfahren nach einem der vorangegangenen Ansprüche, **dadurch gekennzeichnet, dass** der Reduktionsofen in der Betriebsart Reduktionsbetrieb halbgeschlossen ohne Bodenelektrode betrieben wird.

7. Verfahren nach einem der vorangegangenen Ansprüche, **dadurch gekennzeichnet, dass** der Reduktionsofen aus einer seinem Ofengefäß zugeordneten mobilen Energieversorgungseinheit oder - über geeignete Kupplungseinrichtungen - aus dem Werksnetz der hüttentechnischen Anlage oder der Deponie mit elektrischer Energie gespeist wird.

8. Verfahren nach einem der vorangegangenen Ansprüche, **dadurch gekennzeichnet, dass** der Aufenthalt des Reduktionsofens am Ort der Reststoffe beliebig lange, von Stunden bis Jahren, dauern kann.

9. Verfahren nach einem der vorangegangenen Ansprüche, **dadurch gekennzeichnet, dass** der Reduktionsofen nach seinem Betrieb in der Betriebsart Reduktionsbetrieb vor Ort in der Betriebsart Schmelzbetrieb betrieben wird zum Erzeugen von Legierungen.

10. Verfahren nach Anspruch 9, **dadurch gekennzeichnet, dass** die Legierungen zumindest teilweise aus den zuvor im Reduktionsbetrieb durch Aufbereiten der Reststoffe gewonnenen Metalle- oder Nichteisenmetalle erzeugt werden.

11. Vorrichtung (100) aufweisend:
einen Reduktionsofen (110) zum Aufbereiten von Reststoffen aus hüttentechnischen Anlagen,
**gekennzeichnet durch**
eine Transporteinheit (120), auf welcher der Reduktionsofen montiert ist.

12. Vorrichtung (100) nach Anspruch 11,
**dadurch gekennzeichnet, dass**
es sich bei der Transporteinheit (120) um einen Lastkraftwagen, ein Schienenfahrzeug oder ein Schiff handelt.

13. Vorrichtung (100) nach einem der Ansprüchen 11 oder 12,
**dadurch gekennzeichnet, dass**
der Reduktionsofen (110) neben dem eigentlichen Ofengefäß (111) als abnehmbare Komponenten Elektroden (112), Elektrodentragarme (113) und eine Abstichschnauze (114) aufweist.

14. Vorrichtung (100) nach einem der vorangegangenen Ansprüche 11 bis 13,
**dadurch gekennzeichnet, dass**
dem Reduktionsofen (110) eine Mehrzahl von Zusatzaggregaten modular zugeordnet sind, wobei es sich bei den Zusatzaggregaten z.B. um eine Abgasreinigungseinrichtung, eine Kühlwasserversorgungseinheit, eine Hydraulikstation (115), eine Energieversorgungseinheit (116), eine Schaltanlage (117), und/oder einen Leitstand (118) handelt.

15. Vorrichtung (100) nach Anspruch 13 oder 14,
**dadurch gekennzeichnet, dass**
die abnehmbaren Komponenten oder die Zusatzaggregate zumindest teilweise ebenfalls auf der Transporteinheit mit dem Ofengefäß (111) oder auf einer separaten Transporteinheit verfahrbar sind.

16. Vorrichtung (100) nach einem der vorangegangenen Ansprüche 11 bis 15,
**dadurch gekennzeichnet, dass** der Reduktionsofen (110) eine elektrische Leistung von kleiner gleich 2 MVA aufweist, bei einer Primärspannung von ca. 10kV und einer Sekundärspannung von 10-200V.

17. Vorrichtung (100) nach einem der vorangegangenen Ansprüche 11 bis 16,
**dadurch gekennzeichnet, dass** der Reduktionsofen (110) inklusive der abnehmbaren Komponenten und er Zusatzaggregate eine Masse von 20t bis 60t aufweist.

18. Vorrichtung (100) nach einem der vorangegangenen Ansprüche 11 bis 17,
**dadurch gekennzeichnet, dass** die Vorrichtung bestehend aus Reduktionsofen (110) und Transporteinheit (120) eine maximale Transporthöhe von 4 Metern aufweist.

19. Vorrichtung (100) nach einem der vorangegangenen Ansprüche 11 bis 18,
**dadurch gekennzeichnet, dass** der Reduktionsofen (110) zumindest für den Betrieb in der Betriebsart "Reduktionsbetrieb" halbgeschlossen ist und keine Bodenelektrode aufweist.
